# EUROPEAN PATENT APPLICATION

(11) **EP 4 796 766 A1**
(43) Date of publication of application: **26.08.2026**
(21) Application number: 26154284.9
(22) Date of filing: 27.01.2026
(51) Int. Cl.: F01N 3/10, F01N 11/00

(54) **SYSTEMS AND METHODS FOR DIESEL OXIDATION CATALYST AGING PROGNOSTICS AND DIAGNOSTICS**

(30) Priority: 24.02.2025 IN 202541015761
(71) Applicant: Cummins Inc., Columbus, IN 47201 (US)
(72) Inventor: GOSWAMI, Imon, 411004 Pune (IN); PARAMBATH, Ashwyn, 411038 Pune (IN); OJHA, Raghav, 411038 Pune (IN)
(74) Representative: Cleveland Scott York

(57) **Abstract**

Systems and methods for diagnosing a catalyst of an aftertreatment system is described herein. The system includes an exhaust aftertreatment system and a controller coupled to the exhaust aftertreatment system. The controller receives a dosing efficiency regarding a catalyst of the aftertreatment system and determines an actual aging condition of the catalyst based at least in part on the dosing efficiency. The controller further include receives temperature data indicative of an operating temperature of the catalyst, the temperature data having associated runtime durations and determines an expected aging condition of the catalyst based on the temperature data and the associated runtime durations. The controller transmits an early aging notification to a user device in response to the actual aging condition exceeding the expected aging condition.

## Description

### TECHNICAL FIELD

The present disclosure relates generally to the field of exhaust aftertreatment systems, and more particularly to monitoring a diesel oxidation catalyst within an aftertreatment system.

### BACKGROUND

An engine may be coupled to an exhaust aftertreatment system to reduce harmful exhaust gas emissions such as nitrogen oxides (NOx), carbon oxides, such as carbon monoxide (CO) and/or carbon dioxide (CO₂), unburnt hydrocarbons, particulate matter, etc. One or more components of the aftertreatment system may operate most efficiently within a predetermined temperature range. For example, a catalyst member may convert harmful exhaust gas emissions more effectively when the catalyst member is within a predetermined temperature range. However, a temperature of the exhaust gas may change as operating conditions of the engine and/or system change. When the exhaust gas temperature changes, the temperature of the components of the aftertreatment system may change, thereby affecting the ability of the aftertreatment system to operate as intended.

### SUMMARY

One embodiment relates to a system for diagnosing a catalyst of an aftertreatment system. The system includes an exhaust aftertreatment system and a controller coupled to the exhaust aftertreatment system. The controller includes one or more processing circuits comprising one or more memory devices coupled to one or more processors, the one or more memory devices configured to store instructions thereon that, when executed by the one or more processors, cause the one or more processors to perform operations. The operations include receiving a dosing efficiency regarding a catalyst of the aftertreatment system and determining an actual aging condition of the catalyst based at least in part on the dosing efficiency. The operations further include receiving temperature data indicative of an operating temperature of the catalyst, the temperature data having associated runtime durations and determining an expected aging condition of the catalyst based on the temperature data and the associated runtime durations. The operations further include transmitting an early aging notification to a user device in response to the actual aging condition exceeding the expected aging condition.

Another embodiment relates to a control system for diagnosing a catalyst of an aftertreatment system. The control system includes one or more processing circuits comprising one or more memory devices coupled to one or more processors, the one or more memory devices configured to store instructions thereon that, when executed by the one or more processors, cause the one or more processors to perform operations. The operations include receiving a dosing efficiency regarding the catalyst of the aftertreatment system and determining an actual aging condition of the catalyst based at least in part on the dosing efficiency. The operations further include receiving temperature data indicative of an operating temperature of the catalyst, the temperature data having associated runtime durations and determining an expected aging condition of the catalyst based on the temperature data and the associated runtime durations. The operations further include transmitting an early aging notification to a user device in response to the actual aging condition exceeding the expected aging condition.

Yet another embodiment relates to a method. The method includes receiving an actual aging condition of a diesel oxidation catalyst based on a dosing efficiency of the diesel oxidation catalyst, receiving an expected aging condition of the diesel oxidation catalyst based on temperature data and runtime durations associated with the temperature data, and transmitting an early aging notification to a user device in response to the actual aging condition exceeding the expected aging condition.

Numerous specific details are provided to impart a thorough understanding of the embodiments of the subject matter of the present disclosure. The described features of the subject matter of the present disclosure may be combined in any suitable manner in one or more embodiments and/or implementations. In this regard, one or more features of an aspect of the invention may be combined with one or more features of a different aspect of the invention. Moreover, additional features may be recognized in certain embodiments and/or implementations that may not be present in all embodiments or implementations.

### BRIEF DESCRIPTION OF THE DRAWINGS

FIG. 1 is a block diagram of an engine system, according to an exemplary embodiment.
FIG. 2 is a block diagram of a controller of the system of FIG. 1, according to an exemplary embodiment.
FIG. 3 is a block diagram of a process for determining a dosing efficiency of a diesel oxidation catalyst (DOC), according to an exemplary embodiment.
FIG. 4 is a graphical representation of a process for predicting an actual aging condition of a DOC, according to an exemplary embodiment.
FIG. 5 is a flow diagram of a process for determining an estimated aging condition of a DOC, according to an exemplary embodiment.
FIG. 6 is a flow diagram of a process for comparing actual diesel oxidation catalyst (DOC) aging to expected DOC aging times, according to an exemplary embodiment.

### DETAILED DESCRIPTION

Following below are more detailed descriptions of various concepts related to, and implementations of methods, apparatuses, and systems for determining a remaining useful life of a diesel oxidation catalyst (DOC) within an aftertreatment system. The systems and methods described herein may be applicable to a variety of different DOC configurations, such as single substrate DOCs, dual substrate DOCs, multi-functional DOCs with integrated particulate filtration, and so on. Before turning to the Figures, which illustrate certain exemplary embodiments in detail, it should be understood that the present disclosure is not limited to the details or methodology set forth in the description or illustrated in the Figures. It should also be understood that the terminology used herein is for the purpose of description only and should not be regarded as limiting.

As used herein, the term "predicting" and like terms are used to refer to determining a future value based on data (e.g., sensor data, historical sensor data, real-time sensor data, etc.). In some embodiments, predicting the future value may be performed using one or more models (e.g., statistical models, artificial intelligence models, machine learning models, etc.). For example, predicting a remaining useful life of a DOC may include using data, such as sensor data, and testing data, with a model to determine a number of operable hours before failure of the DOC.

As used herein, the term "aging conditions" and like terms are used to refer to the specific temperature at which the Diesel Oxidation Catalyst (DOC) was operated and the duration for which the DOC was exposed to that temperature. As described herein, the temperatures at which the DOC was operated can be used to calculate a single "aging temperature." For example, the "aging temperature" may be an average operating temperature. The duration for which the DOC was exposed to various temperatures can be used to determine a single "aging time." For example, the aging time may represent the total run time of the DOC, or the total run time of the DOC under predetermined conditions (e.g., while the DOC operates within a particular temperature range). In some examples, temperature data is weighted based on the time the DOC operated at the given temperature, such that operating temperatures with longer durations are weighted more heavily than those with shorter durations.

The performance of a diesel oxidation catalyst (DOC) can degrade over time due to the conditions that the DOC has been exposed to (e.g., catalyst poisoning, hydrothermal aging, catalyst face plugging, etc.). Catalyst poisoning refers to the reduced effectiveness of the DOC due to the accumulation of certain substances within the DOC that inhibit its ability to facilitate chemical reactions (e.g., sulfur, lead, ash, etc.). Hydrothermal aging refers to the degradation of the DOC's performance due to prolonged exposure to the high temperatures and water vapor present in the exhaust gases of a diesel engine. Catalyst face plugging refers to an obstruction or blockage of the inlet or outlet surface (e.g., the "face") of the DOC. This blockage may prevent or limit the exhaust gases from flowing through the DOC (e.g., the inability of the catalyst to perform its intended functions, such as to oxidize hydrocarbons, carbon monoxide, etc. in the exhaust gas).

Based on the foregoing and referring to the Figures generally, the various embodiments disclosed herein relate to systems, apparatuses, and methods for determining and comparing and expected aging condition for a DOC to an actual aging condition of a DOC. The systems may include a system for a vehicle. The system may include one or more sensors coupled to an aftertreatment system and a controller having one or more processing circuits comprising one or more memory devices coupled to one or more processors. The controller may receive a dosing efficiency of a diesel oxidation catalyst and determine an actual aging condition of the diesel oxidation catalyst based on the dosing efficiency. The controller may further receive temperature data indicative of an operating temperature of the diesel oxidation catalyst, the temperature data having associated runtime durations and determine an expected aging condition of the diesel oxidation catalyst based on the temperature data and the associated runtime durations. The controller transmits an early aging notification to a user device in response to the actual aging condition exceeding the expected aging condition.

The systems, computer-readable media, and methods described herein provide a technical solution to the challenge of determining the remaining useful life of a Diesel Oxidation Catalyst (DOC) using real-time and testing data. These methods enable a controller to assess whether a DOC is aging faster than anticipated and notify relevant users (e.g., drivers, service engineers, DOC producers) about the DOC's aging condition. If the DOC is aging more rapidly than expected, the controller can generate recommendations. These recommendations may include instructions for drivers to modify their driving behaviors, which can help mitigate or eliminate factors that accelerate DOC aging, such as high operating temperatures, inefficient dosing, catalyst poisoning, hydrothermal aging, and catalyst face plugging. Additionally, these notifications and recommendations can assist service engineers in diagnosing issues with the DOC or anticipating its failure, thereby improving maintenance and operational efficiency. Furthermore, the controller's ability to provide DOC lifespan predictions may reduce unexpected downtimes and maintenance costs. First, indications that a DOC is aging faster than expected allows for proactive maintenance scheduling. By predicting when the DOC is likely to fail, maintenance can be planned during convenient times, which may avoid unexpected breakdowns. Second, early detection of accelerated DOC aging helps in preventing secondary damage to other vehicle components. When a DOC is not functioning optimally, it can lead to increased emissions and potential damage to the engine and exhaust system. These and other features and benefits are described herein below.

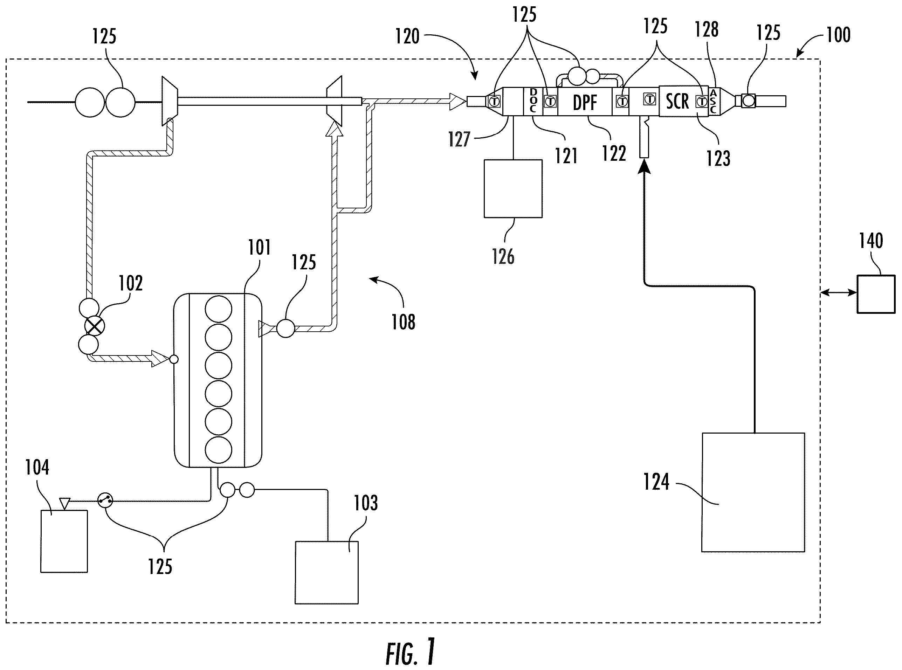

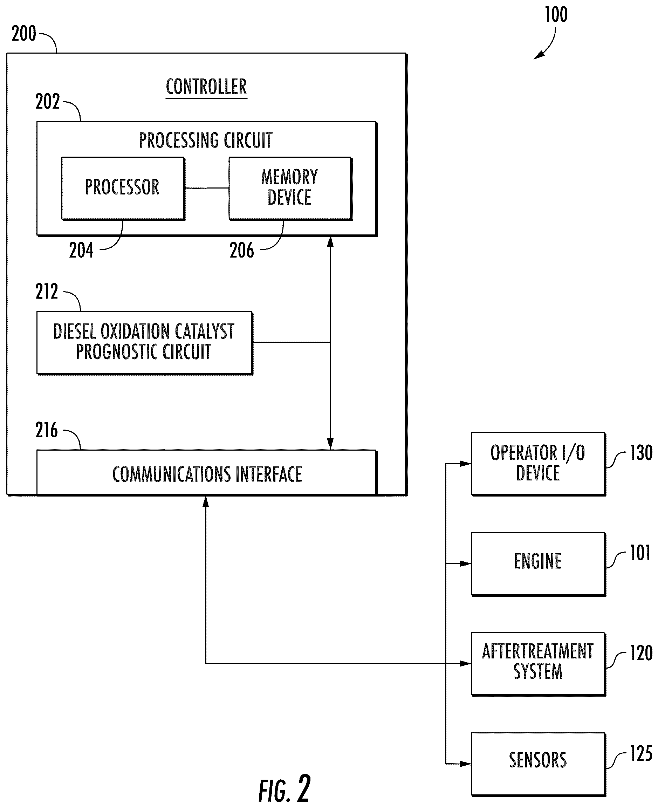

Now referring to FIG. 1, a schematic view of a block diagram of a system 100 is shown, according to an example embodiment. The system 100 includes an engine 101, an aftertreatment system 120 in exhaust gas receiving communication with the engine 101. The system 100 may also include a controller 140 and an operator input/output (I/O) device (shown in FIG. 2), where the controller 140 is communicably coupled to each of the aforementioned components. In the configuration of FIG. 1, the system 100 is included in a vehicle. The vehicle may be any type of on-road or off-road vehicle including, but not limited to, wheel-loaders, fork-lift trucks, line-haul trucks, mid-range trucks (e.g., pick-up truck, etc.), sedans, coupes, tanks, airplanes, boats, and any other type of vehicle. In another embodiment, the system 100 may be embodied in a stationary piece of equipment, such as a power generator or genset. All such variations are intended to fall within the scope of the present disclosure.

The engine 101 may be any type of internal combustion engine that generates exhaust gas, such as a gasoline, natural gas, or diesel engine, and/or any other suitable engine. In the example depicted, the engine 101 is a part of a diesel engine system. In other embodiments, the engine 101 is part of a hybrid engine system having a combination of an internal combustion engine and at least one electric motor coupled to at least one battery. In some embodiments, the hybrid engine system may be configured as a mild-hybrid powertrain, a parallel hybrid powertrain, a series hybrid powertrain, or a series-parallel powertrain.

As shown in FIG. 1, an intake air throttle (IAT) valve 102, a fuel module 103, an oil system 104, and an aftertreatment system 120 are coupled to the engine 101. The IAT valve 102 is structured to control an amount of air supplied to the engine 101. The fuel module 103 is structured to provide fuel to the engine 101 (e.g., from a fuel source). The fuel module 103 may control one or more fueling parameters including a fuel amount, a fuel pressure, a fuel injection timing, etc. The fuel module 103 may further control post-injection of fuel into a combustion chamber of the engine 101. The post-injection process results in a portion of the fuel (e.g., diesel or hydrocarbons) being carried into the exhaust gas as it exits the engine 101. The oil system 104 is configured to provide a lubricant (e.g., lubricant oil) to the engine 101.

The IAT valve 102 is a valve positioned at an air inlet of the engine 101. The IAT valve 102 may be actuated (e.g., by an actuator controlled by the controller 140) between an open position and a closed position. In the open position, the IAT valve 102 allows a maximum amount of air to flow from the air intake to the engine 101. In the closed position, the IAT valve 102 allows a minimum amount of air to flow from the air intake to the engine 101. The controller 140 may selectively actuate the IAT valve 102 (e.g., by controlling the actuator) in a plurality of positions between and/or including the open position and the closed position to adjust the amount of air received by the engine 101.

The aftertreatment system 120 is in exhaust-gas receiving communication with the engine 101. In the example depicted, the aftertreatment system includes a first catalyst member, shown as a diesel oxidation catalyst (DOC) 121, a filter (e.g., a particulate filter), shown as a diesel particulate filter (DPF) 122, and a second catalyst member, shown as a selective catalytic reduction (SCR) 123 system. In some embodiments, the aftertreatment system 120 includes a third catalyst member, shown as an ammonia slip catalyst (ASC) 128. The DOC 121, the DPF 122, and the SCR 123 may be fluidly coupled by an exhaust gas conduit. The DOC 121 is structured to receive the exhaust gas from the engine 110 and to oxidize one or more exhaust gas constituents (e.g., hydrocarbons, carbon monoxide, etc.) in the exhaust gas. The DPF 122 is arranged or positioned downstream of the DOC 121 and structured to remove particulates or particulate matter, such as soot, from exhaust gas flowing in the exhaust gas stream. The DPF 122 includes an inlet, where the exhaust gas is received, and an outlet, where the exhaust gas exits after having particulate matter substantially filtered from the exhaust gas. In some implementations, the DPF 122 or other components may be omitted and/or other components added (e.g., a second SCR system having an additional dosing unit or module, multiple DOCs, etc.). Additionally, although a particular arrangement is shown for the aftertreatment system 120 in FIG. 1, the arrangement of components within the aftertreatment system 120 may be different in other embodiments (e.g., the DPF 122 positioned downstream of the SCR 123 and ASC).

The aftertreatment system is shown to include a hydrocarbon mixer 127 (e.g., hydrocarbon decomposition chamber, hydrocarbon mixing chamber mixer, etc.). The hydrocarbon decomposition chamber is positioned upstream of the DOC 121. The hydrocarbon mixer 127 is configured to receive the exhaust from exhaust gas conduit 108. A hydrocarbon dosing module 126 (e.g., dosing unit, doser, a dosing device, etc.) is coupled with the hydrocarbon mixer 127 and configured to deliver fuel, such as hydrocarbon, to the aftertreatment system 120. The hydrocarbon dosing module 126 is configured to facilitate passage of hydrocarbon fluid into the hydrocarbon mixer 127. The hydrocarbon dosing module 126 may include at least one hydrocarbon injector (e.g., insertion device, etc.). The hydrocarbon injector is configured to dose the hydrocarbon fluid into the exhaust within the hydrocarbon mixer 127 (e.g., from a fuel/hydrocarbon source).

The hydrocarbons within the hydrocarbon mixer 127 may be configured to increase the temperature of the exhaust within the hydrocarbon mixer 127. In some examples, the aftertreatment system 120 includes an igniter (e.g., spark plug, etc.,) coupled to the hydrocarbon mixer 127. The igniter is configured to combust the hydrocarbon fluid in the exhaust within the hydrocarbon mixer 127, causing the increase in temperature of the exhaust. Consequently, regeneration of downstream components may occur. For example, regeneration occurs when the hydrocarbon fluid in the exhaust combusts and increase the temperature of the exhaust such that the exhaust burns any soot or particles which may be affixed to the downstream components. By burning the affixed soot or particles, the downstream components may be cleaned off such that they are like new and operate as such.

The aftertreatment system 120 may further include a reductant delivery system which may include a decomposition chamber (e.g., decomposition reactor, reactor pipe, decomposition tube, reactor tube, etc.) to convert a reductant into ammonia, shown as a dosing module 124. The reductant may be, for example, urea, diesel exhaust fluid (DEF), Adblue^{®}, a urea water solution (UWS), an aqueous urea solution (e.g., AUS32, etc.), and other similar fluids. The dosing module 124 may include a reservoir, a pump, and a nozzle (and potentially other components or devices). The reservoir may be structured to store the reductant. The pump may be fluidly coupled to the reservoir and the nozzle by a dosing conduit and structured to pump the reductant from the reservoir to the nozzle. The nozzle may provide the reductant to the exhaust gas within the exhaust gas conduit. The reductant fluid is added to the exhaust gas stream to aid in the catalytic reduction. As shown in FIG. 1, the reductant may be injected upstream of the SCR 123 generally (or in particular, the SCR catalyst) by the dosing module 124 such that the SCR catalyst receives a mixture of the reductant and exhaust gas. The reductant droplets then undergo the processes of evaporation, thermolysis, and hydrolysis to form gaseous ammonia within the decomposition chamber, the SCR catalyst, and/or the exhaust gas conduit system, which leaves the aftertreatment system 120.

The DOC 121 is fluidly coupled to the exhaust gas conduit system to oxidize one or more gas constituents (e.g., hydrocarbons, carbon oxides, etc.) of the exhaust gas. In order to properly assist in the oxidation of the one or more gas constituents, the DOC 121 may be required to be at a certain operating temperature. In some embodiments, this certain operating temperature is approximately between 200-500° C. In other embodiments, the certain operating temperature is the temperature at which the conversion efficiency of the DOC 121 exceeds a predefined threshold (e.g., the conversion of hydrocarbons to less harmful compounds, which is known as the hydrocarbons conversion efficiency).

The SCR 123 is configured to assist in the reduction of NOx emissions by accelerating a NOx reduction process between the ammonia and the NOx of the exhaust gas into diatomic nitrogen (N2) and water (H2O). If the SCR catalyst is not at or above a certain temperature, the acceleration of the NOx reduction process is limited and the SCR 123 may not be operating at a level of a desired conversion efficiency (i.e., a value indicative of an amount of reduction of NOx emissions, also referred to as "deNOx efficiency"). In some embodiments, this certain temperature is approximately 200-600°C. The SCR catalyst may be made from a combination of an inactive material and an active catalyst, such that the inactive material (e.g. ceramic substrate) directs the exhaust gas towards the active catalyst, which is any sort of material suitable for catalytic reduction (e.g. metal exchanged zeolite (Fe or Cu/zeolite), base metals oxides like vanadium, molybdenum, tungsten, etc.).

When ammonia in the exhaust gas does not react with the SCR catalyst (either because the SCR 123 is below operating temperature or because the amount of dosed ammonia greatly exceeds the amount of NOR), the unreacted ammonia may bind to the SCR catalyst, becoming stored in the SCR 123. This stored ammonia is released from the SCR 123 as the SCR 123 warms, which can cause issues if the amount of ammonia released is greater than the amount of NOx passing through (i.e., more ammonia than needed for the amount of NOx), which can lead to ammonia slip. In some embodiments, the ASC 128 is included and structured to address ammonia slip by removing at least some excess ammonia from the treated exhaust gas before the treated exhaust gas is released into the atmosphere. As exhaust gas passes through the ASC 128, some of unreacted ammonia (i.e., unreacted with NOx) remaining in the exhaust gas is partially oxidized to NOx, which then consequently reacts with the remaining unreacted ammonia to form N2 gas and water. However, similar to the SCR catalyst, if the ASC 128 is not at or above a certain temperature, the acceleration of the NH3 reduction process is limited and the ASC 128 may not be operating at a level of efficiency to meet regulations or desired parameters. In some embodiments, this certain temperature is approximately 250-300° C.

As shown, a plurality of sensors 125 are included in the aftertreatment system 120. The number, placement, and type of sensors included in the aftertreatment system 120 is shown for example purposes only. That is, in other configurations, the number, placement, and type of sensors may differ. The sensors 125 may be gas constituent sensors (e.g., NOx sensors, oxygen sensors, etc.), temperature sensors, particulate matter (PM) sensors, flow rate sensors (e.g., mass flow rate sensors, volumetric flow rate sensors, etc.), other exhaust gas emissions constituent sensors, pressure sensors, some combination thereof, and so on. The gas constituent sensors may include an oxygen sensor that is structured to acquire data indicative of the presence of oxygen in the exhaust gas. The data from the oxygen sensor may be used to estimate an AFR value. The flow rate sensors may include a mass air flow (MAF) sensor structured to acquire data indicative of a mass flow rate of the exhaust gas. The temperature sensors are structured to acquire data indicative of a temperature value at each location that the temperature sensor is located.

The sensors 125 may be located in or proximate the engine 101, after the engine 101 and before the aftertreatment system 120, after the aftertreatment system 120, in the aftertreatment system as shown (e.g., coupled to the DPF and/or DOC, coupled to the SCR, etc.), upstream of the engine 101, etc. It should be understood that the location of the sensors may vary. In one embodiment, there may be sensors 125 located both before and after the aftertreatment system 120. In one embodiment, at least one of the sensors is structured as exhaust gas constituent sensors (e.g., CO, NOx, PM, SOx, etc. sensors). In another embodiment, at least one of the sensors 125 is structured as non-exhaust gas constituent sensors that are used to estimate exhaust gas emissions (e.g., temperature, flowrate, pressure, etc.). Additional sensors may be also included with the system 100. The sensors may include engine-related sensors (e.g., torque sensors, speed sensors, pressure sensors, flowrate sensors, temperature sensors, etc.). For example, in some embodiments, at least one of the sensors 125 is structured as an oil temperature sensor that is used to detect and/or determine an engine oil temperature. The sensors may further include sensors associated with other components of the vehicle (e.g., speed sensor of a turbo charger, fuel quantity and injection rate sensor, fuel rail pressure sensor, etc.).

The sensors 125 may be real or virtual (i.e., a non-physical sensor that is structured as program logic in the controller 140 that makes various estimations or determinations). For example, an engine speed sensor may be a real or virtual sensor arranged to measure or otherwise acquire data, values, or information indicative of a speed of the engine 101 (typically expressed in revolutions-per-minute). The sensor is coupled to the engine (when structured as a real sensor) and is structured to send a signal to the controller 140 indicative of the speed of the engine 101. When structured as a virtual sensor, at least one input may be used by the controller 140 in an algorithm, model, lookup table, etc. to determine or estimate a parameter of the engine (e.g., power output, etc.). Any of the sensors 125 described herein may be real or virtual.

The controller 140 is coupled and, particularly communicably coupled, to the sensors 125. Accordingly, the controller 140 is structured to receive data from one more of the sensors 125 and provide instructions/information to the one or more sensors 125. The controller 140 may use the received data to control one more components in the system 100 and/or for monitoring and thermal management purposes.

The operator input/output (I/O) device 130 (shown in FIG. 2) may be coupled to the controller 140, such that information may be exchanged between the controller 140 and the I/O device 130, where the information may relate to one or more components of FIG. 1 or determinations (described below) of the controller 140. The operator I/O device 130 enables an operator of the system 100 to communicate with the controller 140 and one or more components of the system 100 of FIG. 1. For example, the operator input/output device may include, but is not limited to, an interactive display, a touchscreen device, one or more buttons and switches, voice command receivers, etc. In this way, the operator input/output device 130 may provide one or more indications or notifications to an operator, such as a malfunction indicator lamp (MIL), etc. Additionally, the vehicle may include a port that enables the controller 140 to connect or couple to a scan tool so that fault codes and other information regarding the vehicle may be obtained.

In some embodiments, the operator I/O device 130 includes an operator interface device. In some embodiments, the operator interface device is a button or a switch, such as a momentary switch. In other embodiments, the operator interface device is or is part of a graphical user interface provided on a display of the operator I/O device 130. For example, the operator interface device may be an interactable icon or similar element of a graphical user interface that a user can select via a touch input or with another device, such as a keyboard or mouse. In some embodiments, the operator I/O device 130 includes processing circuitry that enables communication between the operator interface device and the controller 140 (e.g., wired and wireless connections).

The controller 140 is structured to control, at least partly, the operation of the system 100 and associated sub-systems, such as the engine 101 and the operator I/O device 130. Communication between and among the components may be via any number of wired or wireless connections. For example, a wired connection may include a serial cable, a fiber optic cable, a CAT5 cable, or any other form of wired connection. In comparison, a wireless connection may include the Internet, Wi-Fi, cellular, radio, etc. In one embodiment, a controller area network (CAN) bus provides the exchange of signals, information, and/or data. The CAN bus includes any number of wired and wireless connections. Because the controller 140 is communicably coupled to the systems and components of FIG. 1, the controller 140 is structured to receive data from one or more of the components shown in FIG. 1. The structure and function of the controller 140 is further described in regard to FIG. 2.

As the components of FIG. 1 are shown to be embodied in a vehicle, the controller 140 may be structured as one or more electronic control units (ECUs), such as one or more microcontrollers. The controller 140 may be separate from or included with at least one of a transmission control unit, an exhaust aftertreatment control unit, a powertrain control module, an engine control module, etc.

Now referring to FIG. 2, a schematic diagram of the controller 140 of the system 100 of FIG. 1 is shown, according to an example embodiment. As shown, the controller 140 includes at least one processing circuit 202 having at least one processor 204 and at least one memory device 206, a DOC prognostic circuit 212, and a communications interface 216.

In one configuration, the DOC prognostic circuit 212 is embodied as machine or computer-readable media storing instructions that are executable by a processor, such as processor 204. As described herein and amongst other uses, the machine-readable media facilitates performance of certain operations to enable reception and transmission of data. For example, the machine-readable media may provide an instruction (e.g., command, etc.) to, e.g., acquire data. In this regard, the machine-readable media may include programmable logic that defines the frequency of acquisition of the data (or, transmission of the data). The computer readable media instructions may include code, which may be written in any programming language including, but not limited to, Java or the like, and any conventional procedural programming languages, such as the "C" programming language or similar programming languages. The computer readable program code may be executed on one processor or multiple remote processors. In the latter scenario, the remote processors may be connected to each other through any type of network (e.g., CAN bus, etc.).

In another configuration, the DOC prognostic circuit 212 is embodied as one or more hardware units, such as one or more electronic control units. As such, the DOC prognostic circuit 212 may be embodied as one or more circuitry components including, but not limited to, processing circuitry, network interfaces, peripheral devices, input devices, output devices, sensors, etc. In some embodiments, the DOC prognostic circuit 212 may take the form of one or more analog circuits, electronic circuits (e.g., integrated circuits (IC), discrete circuits, system on a chip (SOCs) circuits, microcontrollers, etc.), telecommunication circuits, hybrid circuits, and any other type of "circuit." In this regard, the DOC prognostic circuit 212 may include any type of component for accomplishing or facilitating achievement of the operations described herein. For example, a circuit as described herein may include one or more transistors, logic gates (e.g., NAND, AND, NOR, OR, XOR, NOT, XNOR, etc.), resistors, multiplexers, registers, capacitors, inductors, diodes, wiring, and so on. The DOC prognostic circuit 212 may also include or be programmable hardware devices such as field programmable gate arrays, programmable array logic, programmable logic devices or the like. The DOC prognostic circuit 212 may include one or more memory devices for storing instructions that are executable by the processor(s) of the DOC prognostic circuit 212. The one or more memory devices and processor(s) may have the same definition as provided below with respect to the memory device 206 and processor 204. In some hardware unit configurations, the DOC prognostic circuit 212 may be geographically dispersed throughout separate locations in the vehicle. Alternatively and as shown, the DOC prognostic circuit 212 may be embodied in or within a single unit/housing, which is shown as the controller 140.

In the example shown, the controller 140 includes the processing circuit 202 having the processor 204 and the memory device 206. The processing circuit 202 may be structured or configured to execute or implement the instructions, commands, and/or control processes described herein with respect to the DOC prognostic circuit 212. The depicted configuration represents the DOC prognostic circuit 212 being embodied as machine or computer-readable media storing instructions. However, as mentioned above, this illustration is not meant to be limiting as the present disclosure contemplates other embodiments where the DOC prognostic circuit 212 is configured as a hardware unit. All such combinations and variations are intended to fall within the scope of the present disclosure.

The processor 204 may be implemented as one or more single or multi-chip processors, digital signal processors (DSPs), application specific integrated circuits (ASICs), field programmable gate arrays (FPGAs), and/or suitable processors (e.g., other programmable logic devices, discrete hardware components, etc. to perform the functions described herein). A processor may be a microprocessor, a group of processors, etc. A processor also may be implemented as a combination of computing devices, such as a combination of a DSP and a microprocessor, a plurality of microprocessors, one or more microprocessors in conjunction with a DSP core, or any other such configuration. In some embodiments, the one or more processors may be shared by multiple circuits (e.g., the DOC prognostic circuit 212 may comprise or otherwise share the same processor which, in some example embodiments, may execute instructions stored, or otherwise accessed, via different areas of memory). Alternatively or additionally, the one or more processors may be structured to perform or otherwise execute certain operations independent of one or more co-processors. In other example embodiments, two or more processors may be coupled via a bus to enable independent, parallel, pipelined, or multi-threaded instruction execution. All such variations are intended to fall within the scope of the present disclosure.

The memory device 206 (e.g., memory, memory unit, storage device) may include one or more devices (e.g., RAM, ROM, Flash memory, hard disk storage) for storing data and/or computer code for completing or facilitating the various processes, layers and modules described in the present disclosure. For example, the memory device 206 may include dynamic random-access memory (DRAM). The memory device 206 may be communicably connected to the processor 204 to provide computer code or instructions to the processor 204 for executing at least some of the processes described herein. Moreover, the memory device 206 may be or include tangible, non-transient volatile memory or non-volatile memory. Accordingly, the memory device 206 may include database components, object code components, script components, or any other type of information structure for supporting the various activities and information structures described herein.

The communications interface 216 may include any combination of wired and/or wireless interfaces (e.g., jacks, antennas, transmitters, receivers, transceivers, wire terminals) for conducting data communications with various systems, devices, or networks structured to enable in-vehicle communications (e.g., between and among the components of the vehicle) and/or out-of-vehicle communications (e.g., with a remote server). For example, and regarding out-of-vehicle/system communications, the communications interface 216 may include an Ethernet card and port for sending and receiving data via an Ethernet-based communications network and/or a Wi-Fi transceiver for communicating via a wireless communications network.
The communications interface 216 may be structured to communicate via local area networks or wide area networks (e.g., the Internet) and may use a variety of communications protocols (e.g., IP, LON, Bluetooth, ZigBee, radio, cellular, near field communication).

As shown in FIG. 2, the communications interface 216 may enable communication with the engine 101, the aftertreatment system 120 (and/or the catalytic devices therein, such as the DOC 121), and the sensors 125.

The DOC prognostic circuit 212 is structured or configured to determine or calculate actual aging conditions of the DOC 121 and expected aging conditions of the DOC 121. The DOC prognostic circuit 212 compares the actual aging conditions to the expected aging conditions for the DOC 121 to draw one or more conclusions regarding a health of the DOC 121. For example, if the actual aging conditions exceed the expected aging conditions, the DOC prognostic circuit 212 may diagnose the DOC 12 with excessive actual aging conditions, such as catalyst positioning, hardware failure upstream of the DOC 121, or a smoking engine 101 (e.g., such that the smoke output by the engine 101 results in soot deposits that plug or obscure the DOC 121 inlet).

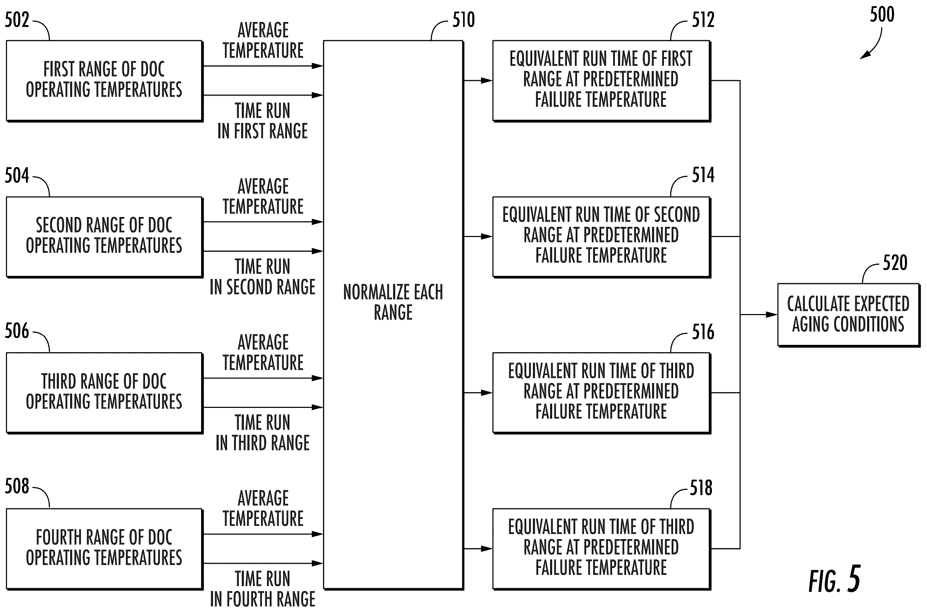

The expected aging conditions refer to at least one benchmark aging condition value that is determined based on temperature data associated with the DOC 121 (e.g., collected by sensors 125). The calculation or determination that may be performed by the controller 200. More specifically, the DOC prognostic circuit 212 may determine expected aging conditions, which is described in greater detail below with respect to FIG. 5.

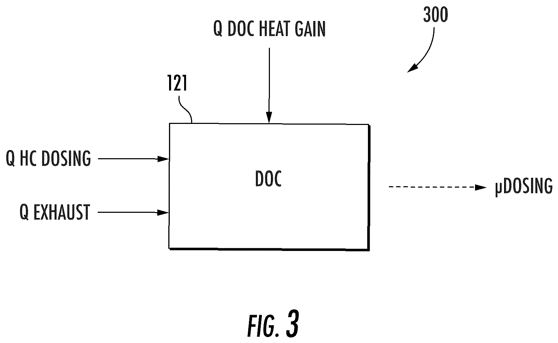

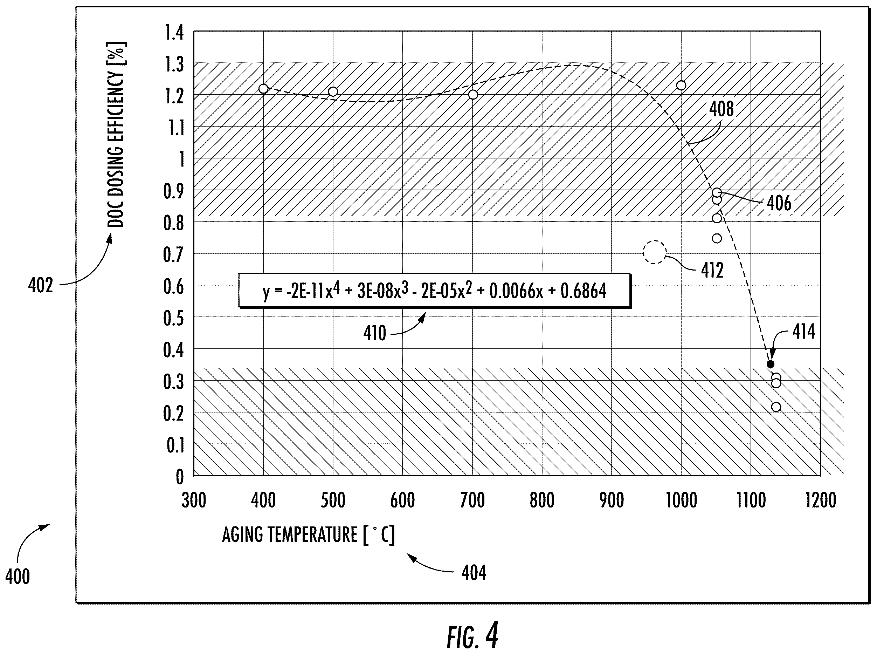

The actual aging conditions of the DOC 121 are calculated or determined by the controller, or more specifically, the DOC prognostic circuit 212 based on a dosing efficiency of the DOC 121. The "dosing efficiency" of the DOC 121 refers to the effectiveness of converting dosed fuel (e.g., fuel injected by the hydrocarbon dosing module 126) into useful heat (e.g., the heat generated by the injected fuel, or hydrocarbons, which raises the temperature of the exhaust gas as it passes through the DOC 121). The process may be performed by the controller 200, or more specifically, the DOC prognostic circuit 212, to determine the actual aging conditions of the DOC 121, which is described in greater detail below with respect to FIGS. 3 and 4 .

Referring now to FIG. 3, a block diagram of a process 300 for determining the dosing efficiency of the DOC 121 is shown, according to an exemplary embodiment. In exemplary embodiments, the controller 200, and more specifically, the DOC prognostic circuit 212 performs the process 300. In other examples, a remote computing system (e.g., a provider computing system, some other computing system located remotely relative to the system 100) determines the dosing efficiency of the DOC 121 and transmits the dosing efficiency to the DOC prognostic circuit 212. In this way, the DOC prognostic circuit 212 may receive and/or determine the dosing efficiency of the DOC 121.

As shown in FIG. 3, a heat value of hydrocarbon injected into the exhaust stream (Q_{HC Dosing}) and a quantity of exhaust gas having a particular thermal energy (Q _{Exhaust}) are inputs to the DOC 121. Q_{HC Dosing} represents the heat energy available (e.g., to the DOC 121) from the hydrocarbon injected into the fuel stream. Q _{Exhaust} represents the thermal energy in the exhaust gas before dosing (e.g., via fuel injection) and before oxidation in the DOC 121. Additionally, the DOC 121 can store or gain heat over time as its internal temperature changes (e.g., due to changes in temperature of the exhaust gas received by the DOC 121) (Q _{DOC Heat Gain}). Q _{DOC Heat Gain} represents an input to the DOC prognostic circuit 212 when determining dosing efficiency.

Q_{HC Dosing}, Q _{Exhaust}, Q _{DOC Heat Gain} are determined by: $Q HC Dosing = HCdosed ∗ LHVfuel$ $Q Exhaust = mExh ∗ Cp ∗ dT$ $Q DOC Heat Gain = Heat Capacity ∗ \left(dT/dt\right)$

Regarding Q_{HC Dosing}, HC_{dosed} represents an amount (e.g., a mass) of hydrocarbon (e.g., diesel fuel) injected into an exhaust stream (e.g., by the hydrocarbon dosing module 126, by post-injection from the fuel module 103) and supplied to the DOC 121. Such data may be collected by and transmitted to the DOC prognostic circuit 212 by the hydrocarbon dosing module 126 and/or the fuel module 103. LHV_{fuel} represents a predetermined lower heating value (LHV) for the particular type of fuel injected into the exhaust stream.

Regarding Q _{Exhaust}, m_{Exh} , this value represents a mass of the exhaust gas flowing through the DOC 121. In some examples, the mass of the exhaust gas is a predetermined value. Additionally or alternatively, the DOC prognostic circuit 212 may determine the mass of the exhaust gas based on data indicative of the exhaust gas mass from one or more of the sensors 125 (e.g., a mass flow rate sensor, etc.). Cₚ is a predetermined specific heat capacity of the exhaust gas. dT represents the difference in temperature of the exhaust gas between the DOC 121 inlet and the DOC 121. Such temperature data may be collected and transmitted to the DOC prognostic circuit 212 by sensors 125, and specifically thermistors, positioned upstream and downstream of the DOC 121. In such an example, dT represents the difference between the upstream temperature measurement and the downstream temperature measurement.

Regarding Q _{DOC Heat Gain}, heat capacity represents the thermal capacity of the DOC 121, which may depend on its mass and/or material properties. The heat capacity quantifies how much heat the DOC 121 can store per degree of temperature change. dT/dt represents the rate at which temperatures in the DOC change. Specifically, dT represents the change in temperature within the DOC, which may be measured by the sensors 125, whereas dt represents a change in time (e.g., how much time has surpassed since beginning the temperature measurements).

Using the Q_{HC Dosing}, value, the DOC prognostic circuit 212 determines Q _{Expected} by: $QExpected = μThermal ∗ Q HC Dosing$

Q _{Expected} is an estimated value that represents the heat expected to be generated in the DOC 121 from the injected hydrocarbon fuel (e.g., from the hydrocarbon dosing module 126, from post-injection by the fuel module 103). µ_{Thennal} represents a predetermined thermal efficiency coefficient that represents how efficiently the dosed hydrocarbons convert to heat. As mentioned above Q_{HC Dosing} represents a heat value of hydrocarbon injected into the exhaust stream.

The DOC prognostic circuit 212 may then calculate dosing efficiency (µ_{Dosing} ) using Q Expected, Q _{Exhaust}, Q _{DOC Heat Gain}). $μDosing = \frac{QExhaust + QDOC Heat Gain}{QExpected}$

The dosing efficiency algorithm compares the actual heat energy rate (e.g., Q _{Exhaust}, Q _{DOC Heat Gain}) with the expected head energy rate from hydrocarbon injection (e.g., Q _{Expected}) to determine the effectiveness of the aftertreatment system's hydrocarbon injection and conversion during a regeneration event.

Referring to FIG. 4, a graphical representation of a process 400 for predicting an actual RUL of the DOC 121 is shown, according to an exemplary embodiment. In exemplary embodiments, the controller 200, and more specifically, the DOC prognostic circuit 212, performs the process 400. In other examples, a remote computing system (e.g., a provider computing system, some other computing system located remotely relative to the system 100) predicts the actual RUL of the DOC 121 and transmits the predicted actual RUL to the DOC prognostic circuit 212. In this way, the DOC 121 may receive and/or predict the actual RUL.

The process 400 is shown to involve graphing the dosing efficiency (µ_{Dosing} ) of the DOC 121, shown as the y-axis 402, versus an aging temperature, shown as the x-axis 404. In some examples, the process 400 includes graphing one or more testing data points 406 on the dosing efficiency versus aging temperature graph. Each testing data point 406 represents a DOC that was aged at a particular temperature for a fixed amount of time (e.g., in a lab). This determines the aging temperature (e.g., the x-coordinate) of the testing data point. Aging temperature represents a specified temperature at which the DOC is subjected and the duration the DOC is held at the specified temperature.

The dosing efficiency of the tested DOC may then be calculated, using the process 300 described above. This testing process may be repeated on multiple DOCs until a trend line 408 can be plotted between the testing data points 406 (e.g., using algorithms for regression, etc.). The trend line 408 is used to determine an equation 410 (e.g., a polynomial equation) that represents the testing data. As shown in the equation 410, x, the aging temperature, is an independent variable, whereas y, the dosing efficiency, is a dependent variable. Since dosing efficiency may be calculated by the DOC prognostic circuit 212 using various measured data, the dependent variable may be solved for by the DOC prognostic circuit 212 using process 300. In this way, the DOC prognostic circuit 212 may then determine or calculate the independent variable, aging temperature, using the dosing efficiency. The dosing efficiency and aging temperature may then be plotted, as indicated by point 412, to determine an actual aging temperature of the DOC 121. The DOC prognostic circuit 212 may then estimate the duration for which the DOC 121 was held at the actual aging temperature (e.g., xx°C for yy hours), using an algorithm, a model, a lookup table, and/or the like.

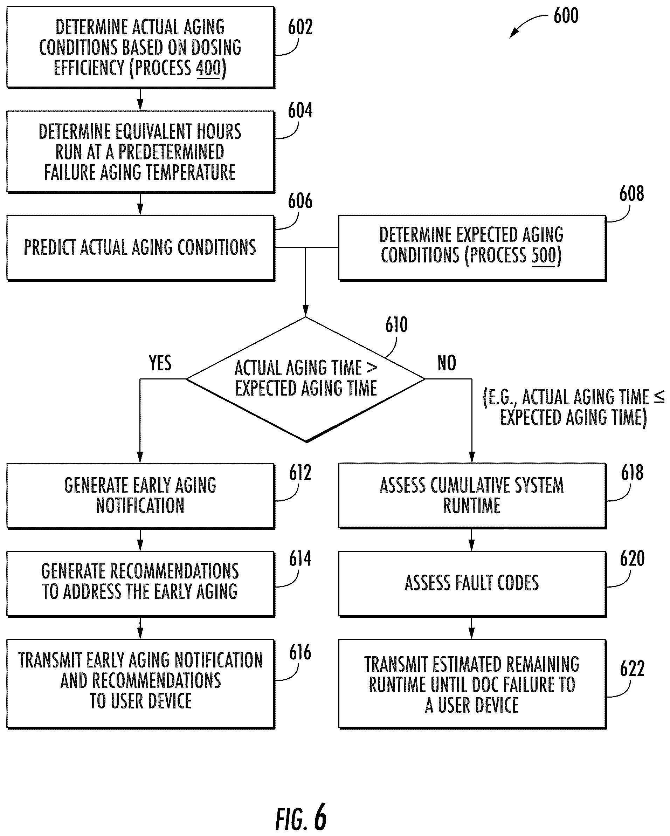

Technically and beneficially, the testing data and the associated trend line 408 may be used to estimate a failure temperature 414. The failure temperature 414 refers to the temperature threshold at which a DOC reaches a point where it fails or experiences irreversible degradation. This could be, for example, the temperature at which a DOC becomes inefficient, or fails to function as intended. For example, the oxidation of the particular chemical contaminants may be below a predefined desired threshold. As another example, the mass flow through the DOC may be below a predefined desired threshold indicating severe plugging of the face of the DOC. By way of example, since the test data points 406 indicating failure of a DOC (e.g., the test data points 406 that fall within the lower shaded portion of the graph) fall within the range of tested temperatures, the DOC prognostic circuit 212 can determine the failure aging temperature 414 by locating a corresponding point on the trend line (e.g., at the intersection between the lower shaded portion and unshaded portion of the graph). The failure temperature 414 may be used to estimate a total useful life of the DOC 121. For example, after the failure temperature 414 is determined, a DOC similar to the DOC 121 (e.g., a similar size and/or model) may be run until failure at the failure temperature 414. Such a duration may be used for comparison to determine a remaining useful life of the DOC 121, as will be described in greater detail with respect to FIG. 6.

Referring to FIG. 5, a flow diagram of a process for determining estimated aging conditions of the DOC 121 is shown, according to an exemplary embodiment. As an overview, the DOC prognostic circuit 212 may collect DOC 121 operating temperature data and time data that the DOC 121 was run at each temperature of a plurality of temperatures (which may also be a temperature range of a plurality of temperature ranges). The DOC prognostic circuit 212 may categorize the temperature data and the associated times run into predetermined temperature ranges. The DOC prognostic circuit 212 may then determine a metric regarding the temperatures in each range and determine a total amount of time run in each temperature range. In the example shown, the metric is an average temperature. But, in other embodiments, a different metric may be utilized. The average temperature and total runtime for each range may then be normalized (e.g., by an algorithm, model, lookup table, or the like) to determine an equivalent time run at a failure temperature (e.g., the failure temperature 414 determined in the process 400). The equivalent run times may then be averaged to determine the expected aging conditions of the DOC 121.

As shown in FIG 5, the DOC prognostic circuit 212 is shown to receive a predetermined set of ranges of operating temperatures associated with the DOC 121, shown as a first range 502, second range 504, third range 506, and fourth range 508. Such ranges may be transmitted to the DOC prognostic circuit 212 by a DOC provider, manufacturer, and/or fleet manager, for example. The sensors 125, and specifically temperature sensors or thermistors, transmit data to the DOC prognostic circuit 212 indicative of the operating temperature of the DOC 121 (e.g., continuously, nearly continuously, in predetermined transmission increments, etc.). Such temperature data is categorized by the DOC prognostic circuit 212 into a corresponding temperature range (e.g., the first range 502, second range 504, third range 506, fourth range 508, etc.). In some examples, the temperature data includes a corresponding amount of time that the DOC 121 spent operating at a given temperature. In other examples, a timer or timers may measure the corresponding amount of time that the DOC 121 spent operating at a given temperature. The DOC prognostic circuit 212 may then average the operating temperatures within each range and determine the total amount of time the DOC 121 operated within each range. An example of this process is shown in the table below:

| Received operating temperature and corresponding time | Categorize into temperature range | Average temperature | Total time run in range |
|---|---|---|---|
| 655°C for 20 min | First Range: 490 - 540°C | | |
| | 493°C for 70 min | 497°C | 150 min |
| 560°C for 50 min | 501°C for 80 min | | |
| 493°C for 70 min | | | |
| 615°C for 30 min | Second Range: 550 - 600°C | | |
| 501°C for 80 min | 560°C for 50 min | 567°C | 110 min |
| | 574°C for 60 min | | |
| 670°C for 15 min | Third Range: 610 - 650°C | | |
| 645°C for 40 min | 615°C for 30 min | 630°C | 70 min |
| 574°C for 60 min | 645°C for 40 min | | |
| | Range 4: > 650°C | | |
| | 655°C for 20 min | 663°C | 35 min |
| | 671°C for 15 min | | |

Once the DOC prognostic circuit 212 has an average temperature (the temperature metric) and total runtime for each of the first range 502, second range 504, third range 506, and the fourth range 508, the DOC prognostic circuit 212 may normalize the temperature and total runtime for each range (e.g., by applying an algorithm, model, or formula-such as an Arrhenius-based formula to each data set), such that they may be directly compared. In exemplary embodiments, the DOC prognostic circuit 212 normalizes the temperature and total runtime for each range using a thermal aging equation, such as a hydrothermal real-world equation. By way of example, to normalize the four sets of input data (e.g., the temperature and total runtime for each of the first range 502, second range 504, third range 506, and the fourth range 508), the hydrothermal real-world equation processes the data to calculate an equivalent run time at a specified failure temperature, which accounts for the relationship between temperature and the rate of aging.

The outputs of the normalization process are four equivalent run times 512, 514, 516, 518 at the chosen failure temperature (e.g., aged at failure temperature°C for yy hours). These times indicate how long the DOC 121 would need to operate at the failure temperature to experience the same degree of aging as it did under the real-world conditions defined by each input. The normalized outputs allow the DOC prognostic circuit 212 to directly compare aging severity across the different input data from the first range 502, the second range 504, the third range 506, and the fourth range 508, regardless of the varying operating temperatures and durations. In this way, at process 520, the DOC prognostic circuit 212 can determine or calculate the expected aging time of the DOC 121 based on the normalized aging temperature data (e.g., using an algorithm, model, lookup table, etc.). By way of example, the expected aging conditions of the DOC 121 may be determined or calculated by averaging the four equivalent runtimes at the chosen failure temperature.

Referring now to FIG. 6, a process 600 is shown for comparing the actual aging time of the DOC 121 to the expected aging time of the DOC 121, according to exemplary embodiments. The process 600 may be performed by the controller 200, or more specifically, by the DOC prognostic circuit 212. In some embodiments, a remote computing system performs all of the process 600 or portions of the process 600. It should be understood that the processes of 600 may be performed in a different order, certain of the processes may be omitted, and/or certain process may be added and still fall within the spirit and scope of the present disclosure.

At step 602, the DOC prognostic circuit 212 and/or a remote computing system perform the process 400 described above to determine aging temperature based on dosing efficiency. As discussed above with respect to FIGS. 3 and 4 the DOC prognostic circuit 212 and/or remote computing system determines (a) a dosing efficiency of the DOC 121 and (b) an aging temperature using a dosing efficiency versus aging temperature equation. As an example, the DOC prognostic circuit 212 and/or remote computing system may determine that the DOC 121 was aged at 1000°C for 15 hours (i.e., the actual aging condition).

At step 604, the DOC prognostic circuit 212 and/or a remote computing system normalize the aging temperature output by the process 400 (e.g., by applying an algorithm, model, or formula). By way of example, to normalize the aging temperature output by process 400, the hydrothermal real-world equation processes the data to calculate an equivalent run time at a specified failure temperature, which accounts for the relationship between temperature and the rate of aging. The hydrothermal real-world aging equation for a diesel oxidation catalyst mathematically adjusts time spent at different temperatures to an equivalent aging time at a reference failure temperature. It applies an Arrhenius-based transformation, where higher temperatures contribute disproportionately to aging due to their exponential effect on reaction rates. By integrating the time spent at each temperature with a scaling factor based on activation energy and a gas constant (R=8.314 J/(mol·K)), the hydrothermal real world aging equation converts varying temperature exposures into a single normalized aging duration. The outputs of the normalization process are equivalent run times at the chosen failure temperature (e.g., failure temperature 414). To continue the example above, the DOC prognostic circuit 212 and/or remote computing system may determine that aging at 1000°C for 15 hours is equivalent to aging 8 hours at a 1170°C failure temperature.

At step 608, the DOC prognostic circuit 212 and/or a remote computing system perform the process 500 described above to determine the expected aging time for the DOC 121. As described above with respect to FIG. 5, the DOC prognostic circuit 212 and/or remote computing system calculate the expected aging time of the DOC 121 based on normalized aging temperature data (e.g., using an algorithm, model, lookup table, etc.). To continue the example above, the output of the process 500 may be an expected aging condition that is normalized to aging 5 hours at the 1170°C failure temperature.

Since both the expected aging time and actual aging time are normalized to an equivalent run time at a specified failure temperature, the expected aging time and actual aging time of the DOC 121 may be directly compared at step 610 by the DOC prognostic circuit 212. According to the examples above, the actual aging time was normalized to aging 8 hours at the 1170°C failure temperature, whereas the expected aging time was normalized to aging 5 hours at the 1170°C failure temperature. Since the actual aging time at the failure temperature, 8 hours, is greater than the expected aging time at the failure temperature, 5 hours, the DOC 121 is aging faster than expected. This may indicate that the DOC 121 is experiencing problems or hazards.

Additionally or alternatively, the DOC prognostic circuit 212 may determine a remaining useful life (RUL) of the DOC 121. As mentioned above, one or more DOCs similar to the DOC 121 (e.g., similar size, model, make, etc.) may be tested to determine the how long a particular DOC can operate at the failure temperature before various particular DOCs fail or experience irreversible degradation. This duration may be used for comparison to determine a remaining useful life of the DOC 121. To continue the example above, the test data may reveal that the plurality of test DOCs 121 can operate at the failure temperature of 1170°C for 15 hours. The DOC prognostic circuit 212 may then determine the difference between useful lifetime at the failure temperature and (a) the actual aging conditions, and (b) the expected aging conditions. To continue the example above, the actual RUL at the 1170°C failure temperature is 7 hours (15 hours - 8 hours) and the expected RUL at the 1170°C failure temperature is 10 hours (15 hours - 5 hours). Since the actual RUL is less than the expected RUL of the DOC 121, the DOC 121 is aging faster than expected. As noted above, this may indicate that the DOC 121 is experiencing problems or hazards.

If the actual aging time is greater than the expected aging time at the failure temperature, the DOC prognostic circuit 212 proceeds to step 612 of the process 600. At step 612, the DOC prognostic circuit generates an early aging notification. The early aging notification (and any other notifications described herein) may be structured in a variety of formats, such as in the form of a push notification sent to a remote device (e.g., a user mobile device), a notification provided within a mobile application executed/running on a user device (e.g., smartphone) communicably coupled to the DOC prognostic circuit 212, a notification (e.g., pop-up message) on an operator I/O device (e.g., dashboard display device) of the vehicle/system embodying the DOC, a message displayed on a computer monitor linked to the DOC prognostic circuit 212 that is separate from the system/vehicle embodying the DOC 121, and/or some other form of notification methodology. In some embodiments, the DOC prognostic circuit 212 generates recommendations to address the early aging (614). By way of example, a DOC 121 aging faster than expected may be due to catalyst positioning, hardware failure upstream of the DOC 121, and/or a smoking engine 101 (e.g., such that the smoke output by the engine 101 results in soot deposits that plug or obscure the DOC 121 inlet). The notification may include an indication of the issue, and at least one recommendation. The at least one recommendation may include a recommendation to have a service provider check for catalyst positioning, hardware failure upstream of the DOC 121, and/or a smoking engine 101. In some embodiments, the DOC prognostic circuit 212 may identify an expected cause of the early aging of the DOC 121 and may generate a recommendation based on the identified cause. For example, the sensors 125, and specifically an oxygen sensor, may detect that the oxygen within the exhaust gas outlet by the engine 101 is below a predetermined threshold, indicative of the engine 101 smoking (e.g., due to improper combustion etc.). The DOC prognostic circuit 212 may receive an indication or determine that the oxygen within the exhaust gas falls below the predetermined threshold and may in turn generate a recommendation indicating that a service provider should inspect the engine 101.

At step 616, the DOC prognostic circuit 212 transmits the early aging notification and/or the recommendation to a user device, such as the I/O device 130. As alluded to above, the early aging notification and recommendation to address the early aging may be included on a graphical user interface (GUI) configured to be displayed on the I/O device 130. For example, the GUI might include a written alert stating: "the diesel oxidation catalyst of Vehicle A is aging faster than expected, consider having a servicer perform a fuel test to check for catalyst poisoning." The early aging notification including the at least one recommendation may be displayed on the I/O device 130, for example, as a pop-up notification, the suggestion may be populated in an application stored on the I/O device 130, as a message such as a text message or email message, or some combination thereof. A user (e.g., a provider employee, a customer, etc.) may log onto the application or web-based interface to view the recommendation. In some embodiments, logging on may include receiving at least one authentication credential (e.g., a device token, a username and password, a PIN, a combination thereof, and so on). Authentication of the I/O device 130 and/or user may enable a remote computing system to access and receive the early aging notification, the expected aging time, the actual aging time, and/or the recommendations regarding the aging time. Without authenticating the I/O device 130, the early aging notification may be securely stored and inaccessible. As indicated above, the authentication credential may be a passkey, a code, a token, and/or other types of credentials. In some examples, the early aging notification is an audible or audio-visual alarm that is output on the I/O device 130. For example, the early aging notification may be an audible message that sounds "warning: early aging of DOC detected, seek service provider as soon as possible."

If the actual aging time is less than or equal to the expected aging time, the DOC prognostic circuit 212 proceeds to step 618 of the process 600. At step 618, the DOC prognostic circuit 212 may receive and assess a cumulative runtime of the system 100. In some examples, the DOC prognostic circuit 212 compares the cumulative runtime of the system 100 to one or more preset threshold runtimes. The preset threshold runtimes may indicate, based on testing data, at what runtimes the system 100, and specifically the DOC 121, should be serviced to maintain emissions levels within specific levels (e.g., according to local regulations, etc.).

At step 620, the DOC prognostic circuit 212 may receive or, in some embodiments, determine fault conditions with respect to the system 100, and more specifically, the aftertreatment system 120 (e.g., indicating issues within the SCR, DOC, DPF, DEF dosing system, etc.). Accordingly, the DOC prognostic circuit 212 may receive or determine indicators regarding operation of the engine 101 and/or aftertreatment system 120 (e.g., onboard diagnostic codes, such as OBD codes, diagnostic trouble codes, fault codes, etc.). These indicators can be used by the DOC prognostic circuit 212 to determine potential statuses/conditions with respect to the components (e.g., health, whether the component is operating as intended, etc.). These indicators may be used to determine whether/how to perform maintenance on the system 100. For example, the sensors 125 may detect one or more conditions of the system 100. For example, the sensors 125 may include a particulate matter (PM) sensors that detects the concentration of soot and other fine particles in the exhaust stream. The DOC prognostic circuit 212 may receive a predetermined threshold value associated with a "normal" or "acceptable" concentration of particles in the exhaust stream. The DOC prognostic circuit 212 may compare the data received by the PM sensors to the predetermined normal/acceptable value, or range of values, and determine whether the particulate matter satisfies the predetermined threshold (e.g., the particulate matter exceeds the uppermost value of the predetermined acceptable range, the particulate matter falls below the lowermost value of the predetermined acceptable range). As another example, at least one of the sensors 125 may be structured as exhaust gas constituent sensors (e.g., CO, NOx, PM, SOx, etc.) sensors. The DOC prognostic circuit 212 may receive a predetermined threshold value, or range of values, associated with a "normal" or "acceptable" amount of a particular type of gas within the exhaust gas. For example, the predetermined threshold may be set based on an acceptable NOx value published by a regulatory authority. The DOC prognostic circuit 212 may compare the data received by the exhaust gas sensors to the predetermined normal/acceptable value, or range of values, and determine whether the exhaust gas constituents satisfy the predetermined threshold. If the measured NOx concentrations fall within the acceptable range, the system is operating as intended. However, if the levels exceed this threshold, it may indicate a malfunction within the SCR 123 or the diesel oxidation catalyst (DOC) 120. In such cases, the DOC prognostic circuit 212 may determine that the exhaust gas constituents do not satisfy the predetermined threshold, triggering a diagnostic alert or fault code. The diagnostic alert or fault code may be displaced on a user device, such as the I/O device 130. For example, and as described above with respect to step 616, the diagnostic alert and/or fault code may be included on a graphical user interface (GUI) configured to be displayed on the I/O device 130. For example, the GUI might include a written alert stating: "the NOx concentration of Vehicle A is approaching the NOx limit set by the regulatory authority, consider having a servicer perform an inspection of the aftertreatment system."

At step 622, the DOC prognostic circuit 212 may transmit the RUL of the DOC 121 to a user device, such as the I/O device 130. The RUL indicates approximately how long the DOC can operate at the failure temperature before it fails or experiences irreversible degradation. The RUL may be used to plan maintenance and/or service of the DOC. For example, if the RUL satisfies a predetermined threshold, the DOC prognostic circuit 212 may transmit a notification to a user or a service provider indicating that the DOC is due for servicing and/or preventative maintenance. Additionally or alternatively, the DOC 121 may transmit a notification to a driver regarding driving behavior adjustments. For example, if a load on the vehicle exceeds a predetermined threshold, then the DOC 121 may transmit a notification to the driver that states "Frequently driving with heavy loads can increase the engine's workload, leading to increased stress on the DOC, consider taking a load less than X weight for your next trip." Technically and beneficially, such notifications to the driver may reduce or slow excessive aging of the DOC by prompting the driver to change their driving behaviors.

As utilized herein, the terms "approximately," "about," "substantially," and similar terms are intended to have a broad meaning in harmony with the common and accepted usage by those of ordinary skill in the art to which the subject matter of this disclosure pertains. It should be understood by those of skill in the art who review this disclosure that these terms are intended to allow a description of certain features described and claimed without restricting the scope of these features to the precise numerical ranges provided. Accordingly, these terms should be interpreted as indicating that insubstantial or inconsequential modifications or alterations of the subject matter described and claimed are considered to be within the scope of the disclosure as recited in the appended claims.

It should be noted that the term "exemplary" and variations thereof, as used herein to describe various embodiments, are intended to indicate that such embodiments are possible examples, representations, or illustrations of possible embodiments (and such terms are not intended to connote that such embodiments are necessarily extraordinary or superlative examples).

The term "coupled" and variations thereof, as used herein, means the joining of two members directly or indirectly to one another. Such joining may be stationary (e.g., permanent or fixed) or moveable (e.g., removable or releasable). Such joining may be achieved with the two members coupled directly to each other, with the two members coupled to each other using one or more separate intervening members, or with the two members coupled to each other using an intervening member that is integrally formed as a single unitary body with one of the two members. If "coupled" or variations thereof are modified by an additional term (e.g., directly coupled), the generic definition of "coupled" provided above is modified by the plain language meaning of the additional term (e.g., "directly coupled" means the joining of two members without any separate intervening member), resulting in a narrower definition than the generic definition of "coupled" provided above. Such coupling may be mechanical, electrical, or fluidic. For example, circuit A "coupled" to circuit B may signify that the circuit A communicates directly with circuit B (i.e., no intermediary) or communicates indirectly with circuit B (e.g., through one or more intermediaries).

While circuits with particular functionality are shown in Figure 2, it should be understood that the controller 200 may include any number of circuits for completing the functions described herein. For example, the activities and functionalities of the DOC prognostic circuit 212 may be distributed in multiple circuits or as a single circuit like shown. Additional circuits with additional functionality may also be included. Further, the controller 200 may further control other activity beyond the scope of the present disclosure.

As mentioned above and in one configuration, the "circuits" may be implemented in machine-readable medium storing instructions for execution by various types of processors, such as the processor 204. An identified circuit of executable code may, for instance, comprise one or more physical or logical blocks of computer instructions, which may, for instance, be organized as an object, procedure, or function. Nevertheless, the executables of an identified circuit need not be physically located together but may comprise disparate instructions stored in different locations which, when joined logically together, comprise the circuit and achieve the stated purpose for the circuit. Indeed, a circuit of computer readable program code may be a single instruction, or many instructions, and may even be distributed over several different code segments, among different programs, and across several memory devices. Similarly, operational data may be identified and illustrated herein within circuits and may be embodied in any suitable form and organized within any suitable type of data structure. The operational data may be collected as a single data set or may be distributed over different locations including over different storage devices, and may exist, at least partially, merely as electronic signals on a system or network.

While the term "processor" is briefly defined above, the term "processor" and "processing circuit" are meant to be broadly interpreted. In this regard and as mentioned above, the "processor" may be implemented as one or more processors, application specific integrated circuits (ASICs), field programmable gate arrays (FPGAs), digital signal processors (DSPs), or other suitable electronic data processing components structured to execute instructions provided by memory. The one or more processors may take the form of a single core processor, multi-core processor (e.g., a dual core processor, triple core processor, quad core processor, etc.), microprocessor, etc. In some embodiments, the one or more processors may be external to the apparatus, for example, the one or more processors may be a remote processor (e.g., a cloud-based processor). Alternatively or additionally, the one or more processors may be internal and/or local to the apparatus. In this regard, a given circuit, or components thereof may be disposed locally (e.g., a local computing system, etc.) or remotely (e.g., as part of a remote server such as a cloud-based server). To that end, a "circuit" as described herein may include components that are distributed across one or more locations.

Although the figures and description may illustrate a specific order of method steps, the order of such steps may differ from what is depicted and described, unless specified differently above. Also, two or more steps may be performed concurrently or with partial concurrence, unless specified differently above. Such variation may depend, for example, on the software and hardware systems chosen and on designer choice. All such variations are within the scope of the disclosure.

The foregoing description of embodiments has been presented for purposes of illustration and description. It is not intended to be exhaustive or to limit the disclosure to the precise form disclosed, and modifications and variations are possible in light of the above teachings or may be acquired from this disclosure. The embodiments were chosen and described in order to explain the principals of the disclosure and its practical application to enable one skilled in the art to utilize the various embodiments and with various modifications as are suited to the particular use contemplated. Other substitutions, modifications, changes, and omissions may be made in the design, operating conditions and arrangement of the embodiments without departing from the scope of the present disclosure as expressed in the appended claims.

Accordingly, the present disclosure may be embodied in other specific forms without departing from its spirit or essential characteristics. The described embodiments are to be considered in all respects only as illustrative and not restrictive. The scope of the disclosure is, therefore, indicated by the appended claims rather than by the foregoing description. All changes which come within the meaning and range of equivalency of the claims are to be embraced within their scope.

## Claims

1. A system for diagnosing a catalyst of an aftertreatment system, the system comprising:
an exhaust aftertreatment system; and a controller coupled to the exhaust aftertreatment system, the controller having one or more processing circuits comprising one or more memory devices coupled to one or more processors, the one or more memory devices configured to store instructions thereon that, when executed by the one or more processors, cause the one or more processors to:
receive a dosing efficiency regarding a catalyst of the aftertreatment system;
determine an actual aging condition of the catalyst based at least in part on the dosing efficiency;
receive temperature data indicative of an operating temperature of the catalyst, the temperature data having associated runtime durations;
determine an expected aging condition of the catalyst based on the temperature data and the associated runtime durations; and
transmit an early aging notification to a user device in response to the actual aging condition exceeding the expected aging condition.

2. The system of claim 1, further comprising a doser fluidly coupled with the aftertreatment system and configured to deliver fuel to the aftertreatment system; and/or
wherein the catalyst is a diesel oxidation catalyst.

3. The system of claim 2, wherein the one or more memory devices are further configured to store instructions thereon that, when executed by the one or more processors, cause the one or more processors to:
receive, from the doser, data indicative of an amount of fuel supplied to the catalyst by the doser;
receive, from one or more sensors, data indicative of a thermal energy of exhaust gas supplied to the catalyst;
receive, from the one or more sensors, data indicative of a heat capacity and change in temperature of the catalyst; and
determine the dosing efficiency of the catalyst.

4. The system of claim 1, wherein the one or more memory devices are further configured to store instructions thereon that, when executed by the one or more processors, cause the one or more processors to:
receive one or more predetermined thresholds for at least one sensor associated with the catalyst;
receive data from the at least one sensor associated with the catalyst;
determine that the data from the at least one sensor satisfies the one or more predetermined thresholds; and
generate one or more recommendations for preventative maintenance in response to the data from the at least one sensor not satisfying the one or more predetermined thresholds.

5. The system of claim 1, wherein the one or more memory devices are further configured to store instructions thereon that, when executed by the one or more processors, cause the one or more processors to:
normalize the actual aging condition of the catalyst;
normalize the expected aging condition of the catalyst; and
transmit the early aging notification to the user device in response to the normalized actual aging condition exceeding the normalized expected aging condition.

6. The system of claim 1, wherein the one or more memory devices are further configured to store instructions thereon that, when executed by the one or more processors, cause the one or more processors to:
receive one or more predetermined temperature ranges;
categorize the temperature data into a corresponding predetermined temperature range;
determine a total runtime duration for each of the one or more predetermined temperature ranges;
determine an aging condition for each of the one or more predetermined temperature ranges based on the corresponding temperature data and the total runtime duration; and
determine the expecting aging condition based on the aging conditions for each of the one or more predetermined temperature ranges.

7. A control system for diagnosing a catalyst of an aftertreatment system, the control system comprising:
one or more processing circuits comprising one or more memory devices coupled to one or more processors, the one or more memory devices configured to store instructions thereon that, when executed by the one or more processors, cause the one or more processors to:
receive a dosing efficiency regarding a catalyst of the aftertreatment system;
determine an actual aging condition of the catalyst based at least in part on the dosing efficiency;
receive temperature data indicative of an operating temperature of the catalyst, the temperature data having associated runtime durations;
determine an expected aging condition of the catalyst based on the temperature data and the associated runtime durations; and
transmit an early aging notification to a user device in response to the actual aging condition exceeding the expected aging condition.

8. The control system of claim 7, wherein the instructions, when executed by the one or more processors, further cause the one or more processors to:
generate one or more recommendations for addressing the actual aging condition in response to the actual aging condition exceeding the expected aging condition; and
transmit the one or more recommendations to the user device.

9. The control system of claim 7, wherein the early aging notification includes at least one of (a) an audible alarm, (b) a graphical user interface displayed by a display device in a system having the catalyst, or (c) a pop-up notification; and/or
wherein the catalyst is a diesel oxidation catalyst.

10. The control system of claim 7, wherein the instructions, when executed by the one or more processors, further cause the one or more processors to:
receive one or more predetermined thresholds for at least one sensor associated with the catalyst;
receive data from the at least one sensor associated with the catalyst;
determine that the data from the at least one sensor satisfies the one or more predetermined thresholds; and
generate one or more recommendations for preventative maintenance in response to the sensor data not satisfying the one or more predetermined thresholds.

11. The control system of claim 7, wherein the instructions, when executed by the one or more processors, further cause the one or more processors to:
normalize the actual aging condition of the catalyst;
normalize the expected aging condition of the catalyst; and
transmit the early aging notification to the user device in response to the normalized actual aging condition exceeding the normalized expected aging condition.

12. The control system of claim 7, wherein the instructions, when executed by the one or more processors, further cause the one or more processors to:
receive one or more predetermined temperature ranges;
categorize the temperature data into a corresponding temperature range;
determine a total runtime duration for each of the one or more predetermined temperature ranges;
determine an aging condition for each of the one or more predetermined temperature ranges based on the corresponding temperature data and the total runtime duration; and
determine the expecting aging condition based on the aging conditions for each of the one or more predetermined temperature ranges.

13. The control system of claim 7, wherein the instructions, when executed by the one or more processors, further cause the one or more processors to:
receive, from a doser, data indicative of an amount of fuel supplied to the catalyst by the doser;
receive, from one or more sensors, data indicative of a thermal energy of exhaust gas supplied to the catalyst;
receive data indicative of a heat capacity and change in temperature of the catalyst; and
determine the dosing efficiency of the catalyst.

14. A method, comprising:
receiving an actual aging condition of a diesel oxidation catalyst based on a dosing efficiency of the diesel oxidation catalyst;
receiving an expected aging condition of the diesel oxidation catalyst based on temperature data and runtime durations associated with the temperature data; and
transmitting an early aging notification to a user device in response to the actual aging condition exceeding the expected aging condition.

15. The method of claim 14, further comprising:
(a):
receiving data indicative of an amount of fuel supplied to the diesel oxidation catalyst by a doser;
receiving data indicative of a thermal energy of exhaust gas supplied to the diesel oxidation catalyst;
receiving data indicative of a heat capacity and change in temperature of the diesel oxidation catalyst; and
determining the dosing efficiency of the diesel oxidation catalyst; and/or
(b):
receiving one or more predetermined thresholds for at least one sensor associated with the diesel oxidation catalyst;
receiving data from the at least one sensor associated with the diesel oxidation catalyst;
determining that the data from the at least one sensor satisfies the one or more predetermined thresholds; and
generating one or more recommendations for preventative maintenance in response to the data from the sensors not satisfying the one or more thresholds; and/or
(c):
normalizing the actual aging condition of the diesel oxidation catalyst;
normalizing the expected aging condition of the diesel oxidation catalyst; and
transmitting the early aging notification to the user device in response to the normalized actual aging condition exceeding the normalized expected aging condition; and/or
(d):
receiving one or more predetermined temperature ranges;
categorizing the temperature data into a corresponding predetermined temperature range;
determining a total runtime duration for each of the one or more predetermined temperature ranges;
determining an aging condition for each of the one or more predetermined temperature ranges based on the corresponding temperature data and the total runtime duration; and
determining the expecting aging condition based on the aging conditions for each of the one or more predetermined temperature ranges.
